# FASCICULE DE BREVET EUROPEEN

(11) **EP 4 044 364 B1**
(45) Date de publication et mention de la délivrance du brevet: **12.07.2023**
(21) Numéro de dépôt: 22155789.5
(22) Date de dépôt: 09.02.2022
(51) Int. Cl.: H01Q 1/08, H01Q 1/22, H01Q 1/27, H01Q 9/16, D02G 3/44, D02G 3/36, G06K 19/02, G06K 19/077

(54) **DISPOSITIF D'ÉMISSION-RÉCEPTION RADIOFRÉQUENCE UTILISANT UNE ANTENNE COMPOSÉE D'UN FIL TEXTIL ET D'UN RUBAN CONDUCTEUR ET ÉTIQUETTE ÉLECTRONIQUE ASSOCIÉE**
FUNKFREQUENZ-SENDE-/EMPFANGSVORRICHTUNG MIT EINER ANTENNE, DIE AUS EINEM TEXTILFADEN UND EINEM LEITFÄHIGEN BAND BESTEHT, UND ENTSPRECHENDES ELEKTRONISCHES ETIKETT
RADIOFREQUENCY TRANSCEIVER DEVICE USING AN ANTENNA MADE UP OF A TEXTILE WIRE AND A CONDUCTIVE RIBBON AND ASSOCIATED ELECTRONIC TAG

(30) Priorité: 15.02.2021 FR 2101414
(43) Date de publication de la demande: 17.08.2022
(73) Titulaire: PRIMO1D, 38000 Grenoble (FR)
(72) Inventeur: GUIRIMAND, Anne, 38360 SASSENAGE (FR); SETTE, Daniele, 38000 GRENOBLE (FR); CEUGNIET, Grégoire, 38000 GRENOBLE (FR)
(74) Mandataire: IP Trust

(56) Documents cités:
- CN-A- 110 184 706
- FR-A1- 3 078 980

## Description

### DOMAINE DE L'INVENTION

La présente invention concerne un dispositif d'émission réception radiofréquence, tel qu'une étiquette RFID (« RFID tag» selon la terminologie anglo-saxonne). Plus particulièrement, la présente invention concerne un dispositif d'émission réception radiofréquence présentant un facteur de forme filaire. Un tel dispositif trouve une application dans le domaine de l'étiquetage d'objets, et tout particulièrement d'objets susceptibles de se déformer comme c'est par exemple le cas dans le domaine de l'habillage ou des pneumatiques.

### ARRIERE PLAN TECHNOLOGIQUE DE L'INVENTION

On connaît des documents US8471773, WO2016038342, WO2011161336, GB2472025, GB2472026, JP2013189718 ou WO2008080245, un dispositif incorporant un circuit intégré à un fil de nature textile, permettant ainsi de conférer à ce dispositif un facteur de forme filaire. Dans le document US2019391560, deux fils d'antenne formés de conducteurs électriques sont respectivement soudés aux plots d'une puce d'émission réception radiofréquence (RF) conformément à la mise en oeuvre de la technologie « E-Thread^{™}».

Cette soudure peut être réalisée dans des rainures aménagées sur des faces latérales et opposées de la puce. Conventionnellement, le fil d'antenne est constitué d'un brin de matériau électriquement conducteur (ou d'une pluralité d'un tel brin), et il présente une section sensiblement circulaire dont le diamètre est typiquement compris entre 50 et 200 microns, ce qui permet de l'insérer dans une rainure formée sur un flanc de la puce, la hauteur de cette puce étant typiquement comprise entre 300 et 500 microns.

Quelle que soit la manière selon laquelle la connexion électrique entre les plots de la puce d'émission réception et le fil d'antenne est réalisée, cette connexion reste relativement fragile. C'est notamment le cas vis-à-vis des efforts de traction, de torsion, ou de cisaillement qui peuvent s'appliquer sur les fils d'antenne lorsque le dispositif d'émission réception est intégré dans un objet, ou au cours de son intégration dans cet objet.

Pour rendre le dispositif d'émission réception radiofréquence plus robuste vis-à-vis de certains au moins de ces efforts, et sans perdre son caractère souple et son facteur de forme filaire, certains documents de l'état de la technique, tel que le document WO2019175509, prévoient d'adosser le dispositif à un fil textile. Il peut par exemple s'agir d'une opération de guipage du dispositif autour d'un fil d'âme textile.

Cette opération de guipage est particulièrement délicate à mettre en oeuvre, car elle nécessite de manipuler des chaînes de dispositifs d'émission réception RF. Les efforts appliqués à cette chaîne lors d'une telle opération, notamment au niveau des connexions électriques entre la puce et les fils d'antenne, peuvent conduire à leur désolidarisation, ce qui rend le dispositif non fonctionnel après qu'il ait été singularisé.

### OBJET DE L'INVENTION

L'objet de la présente invention vise à résoudre au moins en partie ce problème. Plus particulièrement, un but de l'invention est de proposer un dispositif d'émission-réception radiofréquence présentant un facteur de forme filaire, qui soit au moins aussi robuste vis-à-vis des efforts de traction, flexion ou cisaillement que ceux de l'état de la technique, mais plus simple à réaliser.

### BREVE DESCRIPTION DE L'INVENTION

En vue de la réalisation de ce but, l'objet de l'invention propose un dispositif d'émission-réception radiofréquence comprenant :
- une puce comprenant un circuit d'émission-réception et au moins deux plots de connexion électriquement reliés au circuit d'émission-réception ;
- une antenne dipôle couplée au circuit d'émission-réception de la puce.

Selon l'invention, l'antenne dipôle comprend un fil textile et au moins un ruban formé d'un matériau électriquement conducteur, le ruban étant enroulé en spires autour du fil textile pour le recouvrir au moins en partie.

Selon d'autres caractéristiques avantageuses et non limitatives de l'invention, prises seules ou selon toute combinaison techniquement réalisable :
- l'antenne dipôle est constituée de deux fils d'antenne respectivement électriquement reliés aux deux plots de connexion de la puce ;
- les deux fils d'antenne sont respectivement logés dans deux rainures longitudinales aménagées sur des faces opposées de la puce ;
- l'antenne dipôle comprend une boucle d'adaptation d'impédance ;
- les deux fils d'antenne sont respectivement assemblés aux deux plots de connexion de la puce par l'intermédiaire d'un matériau de liaison ;
- le ou les matériau(x) constituant le fil textile est (sont) choisi(s) de sorte que, lorsque le fil est placé en tension sous une charge de 2N, un échauffement local du fil à une température déterminée choisie entre 80°C et 300°C ne provoque pas sa rupture ;
- le (ou les) matériau(x) constituant le fil textile présente(nt) une température de transition vitreuse supérieure à 150°C ;
- le fil textile présente un pouvoir d'élongation élastique supérieur ou égale à 5%, 20%, 50%, voire même à 100% de sa longueur au repos ;
- le fil textile est composé à partir de fibres aramides ou d'un polyester aromatique ;
- le fil textile présente un pouvoir d'élongation élastique inférieur à 5% ;
- le ruban est constitué d'un fil métallique laminé ;
- le ruban présente une épaisseur inférieure ou égale à 30 fois un diamètre du fil textile, avantageusement inférieure ou égale à 10 fois ce diamètre ;
- les spires sont non-jointives, espacées entre elles, ou sont jointives ou se recouvrent ;
- une pluralité de rubans formés de matériaux électriquement conducteurs sont enroulés en spires autour du fil textile.

Selon un autre aspect, l'invention concerne une étiquette électronique comprenant une pièce textile et, adossé et/ou incorporé à la pièce textile, un dispositif d'émission-réception radiofréquence conforme à celui exposé ci-dessus.

### BREVE DESCRIPTION DES FIGURES

D'autres caractéristiques et avantages de l'invention ressortiront de la description détaillée de l'invention qui va suivre en référence aux figures annexées sur lesquels :
[Fig. 1a]

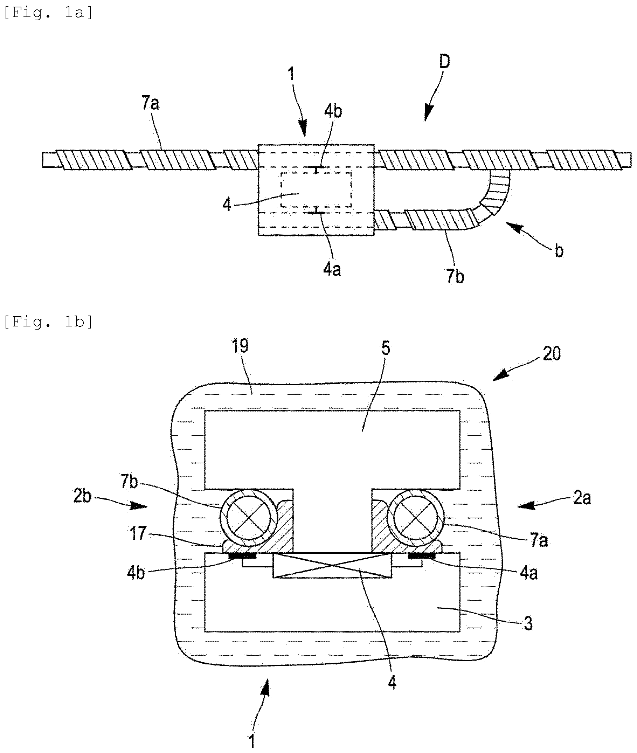

[Fig. 1b] Les figures 1a, 1b représentent respectivement une vue d'ensemble et une coupe d'un dispositif d'émission-réception radiofréquence conforme à un mode de mise en oeuvre ;
[Fig. 1c]

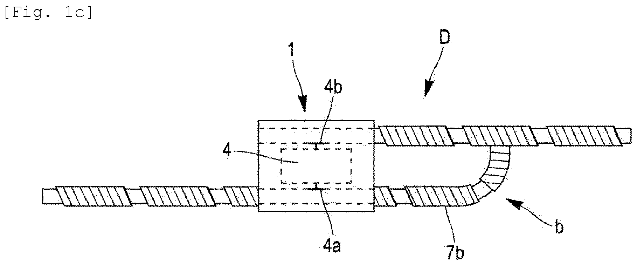

   La figure 1c représente une variante du dispositif représenté sur la figure 1a.

### DESCRIPTION DETAILLEE DE L'INVENTION

Les figures 1a, 1b représentent respectivement une vue d'ensemble et une coupe d'un dispositif d'émission-réception radiofréquence D conforme à un mode de mise en oeuvre.

Le dispositif D comprend un circuit électronique intégré sous la forme d'une puce de semi-conducteurs 1 (plus simplement désigné « puce » dans la suite de sa description). Dans le mode de mise en oeuvre pris en illustration, et comme cela est visible sur la figure 1b, la puce 1 est formée d'un substrat 3 comportant un circuit fonctionnel d'émission-réception 4. La puce comprend également un capot 5, présentant ici une section transversale en T, le pied du T étant assemblé avec une face principale du substrat 3. On constitue de la sorte sur deux faces latérales opposées de la puce 1, entre la barre du T du capot 5 et la surface principale du substrat 3, deux rainures longitudinales 2a, 2b. Ces rainures sont destinées à loger respectivement des portions longitudinales de deux fils d'antenne 7a, 7b, les deux fils constituant une antenne dipôle du circuit d'émission-réception 4. Les rainures 2a, 2b s'étendent d'un côté à l'autre de la puce 1, et présentent une hauteur et une profondeur typiquement comprises chacune entre 50 et 200 microns, de sorte que des portions des fils d'antenne 7a, 7b puissent être logées entièrement dans les rainures et, avantageusement, sans forcer leur encastrement.

La puce 1 comprend également au moins deux plots de connexion 4a, 4b disposés, dans l'exemple représenté sur la figure 1b, sur la face principale du substrat 3 et débouchant respectivement dans l'une et l'autre des rainures 2a, 2b. Ces plots 4a, 4b sont électriquement reliés au circuit d'émission réception 4 de la puce 1 à l'aide de pistes et/ou de vias conducteurs disposés sur et dans le substrat 3. On peut de la sorte placer les fils d'antenne 7a, 7b, en contact électrique avec les plots de connexion 4a, 4b, lorsque ces fils sont logés dans les rainures 2a, 2b, et les faire coopérer avec le circuit d'émission-réception 4. La liaison électrique des fils d'antenne 7a, 7b avec les plots de connexion 4a, 4b est avantageusement réalisé par l'intermédiaire d'un matériau de liaison, qui peut être un matériau de soudure 17 ou une colle conductrice. Le matériau de liaison assure également la tenue mécanique des fils d'antenne 7a, 7b à la puce 1. On peut également envisager de relier électriquement les fils d'antenne 7a, 7b aux plots de connexion 4a, 4b par « wire bonding » (ou « liaison par fil » en français), cette liaison mettant en oeuvre un fil conducteur, par exemple en or, qui est rendu solidaire des deux éléments pour les interconnecter, typiquement par application d'ultrason.

Lorsque cette liaison est réalisée par soudure, l'étape de soudure expose le matériau de soudure à une température typiquement comprise entre 80° et 300°C ce qui permet, lors de la réalisation de cette soudure, de ne pas exposer la puce 1, le circuit 4 et les fils d'antenne 7a, 7b à une température excessive susceptible de les endommager. Le matériau de soudure 17 peut consister en tout matériau conducteur qui convient, par exemple un métal ou un alliage de métaux, par exemple un alliage d'étain, d'argent et de cuivre. La fusion du matériau de soudure peut être réalisé par tous moyens : application d'un rayonnement électromagnétique, par ultra son, par un flux d'air chaud, etc. En alternative à une soudure, on peut employer, comme matériau de liaison, une colle conductrice dont la polymérisation est réalisée en température et/ou par application d'un rayonnement UV. Dans une autre variante encore, les fils d'antenne 7a, 7b sont encastrés dans les rainures de sorte à forcer le contact entre ces fils et les plots de connexion 4a, 4b. Dans ce cas, le matériau de liaison 17 n'est pas nécessaire, et la liaison est effectué à température ambiante et sans apport d'énergie thermique.

Dans tous les cas, on évitera d'exposer la puce 1, le circuit 4 et les fils d'antenne à une température de liaison (température de soudure ou de polymérisation du matériau de liaison) excessive, par exemple excédant 300°C comme cela a été précisé dans le paragraphe précédent. Cette température de liaison est typiquement comprise entre 80°C et 300°C.

On note que le dispositif D peut, dans son usage, être exposé à des températures relativement importantes (par exemple au cours d'un étape de teinture, lorsque ce dispositif est intégré à une pièce textile, ou au cours de son intégration dans un dispositif final, par exemple par extrusion), qui peuvent s'élever par exemple jusque 300°C, si bien que la résistance en température du dispositif et des éléments qui le constituent doivent être aptes à respecter ces contraintes.

Pour des raisons de protection mécanique et chimique, la puce 1 est préférentiellement encapsulée et enrobée d'un matériau de protection 19, tel qu'une résine rigide et étanche.

De nombreuses variantes et additions peuvent être apportées à l'exemple du dispositif D représenté sur les figures 1a, 1b. Ainsi le circuit d'émission réception 4 n'est pas nécessairement incorporé dans le substrat 3, il peut être en partie au moins incorporé dans le capot 5. On munira ce capot 5, si cela apparaît nécessaire ou utile, de plots de connexion, de pistes et de vias similairement à ceux formés sur le substrat 3 de la puce 1 illustrée sur les figures. Le circuit 4 peut présenter d'autres fonctionnalités que celle d'émission-réception et la puce 1 (le substrat 3 et/ou le capot 5 dans l'exemple représenté) ou incorporer d'autres circuits que le circuit d'émission-réception 4. Il peut notamment s'agir de capteurs (de température, de pression...), de circuits de calcul, de mémoire, de sources d'énergie (batterie, cellules solaires...), de circuits optiquement actifs comme une diode électroluminescente. Pour les applications d'étiquetage présentées en introduction de cette demande, le circuit d'émission réception 4 forme avantageusement un circuit d'identification RFID.

On retrouve sur la vue d'ensemble du dispositif d'émission-réception radiofréquence D de la figure 1a, la puce 1 comportant le circuit d'émission-réception 4 électriquement relié aux deux plots 4a, 4b, les deux fils d'antenne 7a, 7b présentant une portion de leur longueur logée dans les rainures de la puce 1, ces deux fils étant respectivement électriquement reliés aux deux plots.

Les deux fils d'antenne constituent une antenne dipôle du dispositif D, la puce 1 étant disposée entre ces deux fils. Par « antenne dipôle », on désigne toute antenne apte à se coupler à un dispositif lecteur par la composante électrique du champ électromagnétique qui se propage entre ces deux éléments, et non par l'intermédiaire d'un champ magnétique inductif seul. La transmission et/ou la réception d'un rayonnement électromagnétique de transmission est réalisée en appliquant ou en percevant un signal électrique, à l'aide du circuit d'émission-réception 4, entre et/ou sur les deux fils 7a, 7b.

Dans la configuration avantageuse représentée sur la figure 1a, le premier fil d'antenne 7a s'étend de part et d'autre de la puce 1. Dit autrement, une portion centrale du premier fil d'antenne 7a est logée dans la rainure 2a de la puce 1. Cette portion centrale est électriquement reliée au plot de connexion 4a du circuit 4, à l'aide du matériau de liaison 17 dans l'exemple représenté. Le deuxième fil d'antenne 7b est quant à lui électriquement relié à l'autre plot de connexion 4b au niveau d'une première extrémité. Le deuxième fil 7b ne s'étend donc que d'un côté de la puce 1. La seconde extrémité, opposée à celle logée dans la rainure 2b, est en contact électrique avec le premier fils d'antenne 7a, de sorte à réaliser une boucle b d'adaptation d'impédance.

Dans une autre configuration avantageuse représentée sur la figure 1c, qui est fonctionnellement identique à celle de la figure 1a, la boucle b d'adaptation d'impédance est réalisée en connectant une extrémité du second fil d'antenne 7b, qui s'étend de part et d'autre de la puce 1, au premier fil d'antenne 7a qui ne s'étend que d'un côté de la puce 1.

D'une manière plus générale, les deux fils d'antenne 7a, 7b sont en contact électrique l'un avec l'autre pour configurer la boucle b permettant d'adapter l'impédance de l'antenne à celle du circuit d'émission-réception 4. La longueur de la boucle est choisie pour faire correspondre au mieux l'impédance de l'antenne à celle du circuit d'émission-réception 4 de la puce 1.

Pour éviter que les deux fils d'antenne 7a, 7b ne se contactent électriquement en dehors du point de contact choisi pour former cette boucle b, on peut prévoir d'enrober les portions émergeantes de ces deux fils (ou au moins l'un d'entre eux) d'un matériau électriquement isolant, telle qu'une résine.

On pourra se référer au document US2019391560 pour obtenir un procédé possible de fabrication d'un tel dispositif d'émission-réception D. Selon ce document, la puce 1 est assemblée aux fils d'antenne, les deux fils étant maintenus en tension et sensiblement parallèle l'un à l'autre lors de cette étape d'assemblage

Selon un aspect important, et dans le but de rendre le dispositif D robuste vis-à-vis des sollicitations mécaniques qu'il pourrait être amené à subir, les fils d'antenne 7a, 7b sont constitués l'un et l'autre d'un fil textile sur lequel est enroulé, en spires, un ruban en matériaux électriquement conducteur. Par « ruban » on désigne un film allongé, souple et plat. Ce ruban peut, par exemple, être constitué d'un fil métallique laminé. Ce ruban est enroulé contre le fil textile, légèrement serré contre ce fil. Il n'est pas nécessaire de prévoir de matière adhésive entre le fil textile et le ruban.

Avantageusement, le fil textile est choisi pour présenter un caractère extensible c'est-à-dire que dans ce cas le fil présente un pouvoir d'élongation élastique qui peut être supérieur ou égale à 5%, 20%, 50%, voire même à 100% de sa longueur au repos. Mais cette caractéristique n'est pas essentielle, et l'invention est parfaitement compatible avec un fil textile non extensible, par exemple présentant une élongation élastique inférieure à 5%.

Le matériau constituant le fil textile est choisi pour résister aux traitements thermiques de fabrication et d'usage du dispositif D qui ont été évoqués antérieurement. Plus spécifiquement, le matériau constituant le fil textile est choisi de sorte que, lorsque le fil est placé en tension sous une charge de 2N, l'échauffement local du fil à la température de liaison des fils d'antenne 7a, 7b à la puce 1 ne provoque pas sa rupture. Comme on l'a vu, cet échauffement peut atteindre 300°C. Cela assure la compatibilité du fil textile avec l'étape d'assemblage. Avantageusement, cet échauffement local provoque une élongation du fil qui ne dépasse pas 20%. Plus spécifiquement encore, le ou les matériau(x) constituant le fil textile présente une température de transition vitreuse supérieure à 150°C.

A titre d'exemple, le fil textile peut être composé à partir de fibres aramides, et ainsi former un fil multi-filament méta-aramides (par exemple connu sous la dénomination commerciale Nomex^{™}), un fil en fibres courtes ou longues méta-aramides, tel qu'un polyamide-imide (par exemple connu sous la dénomination commerciale Kermel^{™}). Il peut alternativement s'agir d'un fil PBO (poly(p-phénylène-2,6-benzobisoxazole), connu sous la dénomination commerciale Zylon^{™}. Il peut également être formé à partir d'un polyester aromatique (par exemple connu sous la dénomination commerciale Vectran^{™}). Il peut également s'agir d'un fil formé d'un polymère tel que du PEAK (polyaryléthercétones), de fibres naturelles, de fibres de verres, de fibres de carbone, de fibres PPS (Polyphénylène Sulphide) ou de fibres d'acier. On peut prévoir que, en plus de ces fibres ou en remplacement, le fil textile comprenne un brin conducteur (ou une pluralité de brins conducteurs) de diamètre inférieur à 20 microns. Le fil textile est avantageusement un isolant électrique ou faiblement conducteur électriquement, sans toutefois écarter la possibilité que ce fil textile soit conducteur.

Le fil présente avantageusement une section transversale circulaire et son diamètre est compris entre 10 microns et 500 microns.

Le ruban en matériau électriquement conducteur peut être, quant à lui, constitué d'un métal ou d'une pluralité de métaux. Comme on l'a vu, il peut s'agir d'un fil métallique laminé. Dans ce cas, et avantageusement, ce laminage est réalisé à froid. Préférentiellement, il n'est pas suivi de recuit thermique. Ce procédé augmente l'écrouissage du matériau constituant la bande, et donc sa résistance à la fatigue.

Le ruban peut être constitué ou comprendre du cuivre, du laiton, du bronze, cupro-nickel, un alliage de cuivre comportant plus de 96% en masse de cuivre, du nickel.

On peut prévoir que ce ruban soit constitué d'une couche principale en un premier matériau, cette couche principale étant recouverte sur au moins une de ses faces d'un revêtement conducteur. Ainsi, la couche principale peut être en acier revêtue d'un revêtement réalisé dans un matériau choisi dans le groupe constitué des matériaux suivants : argent, or, cuivre, étain, nickel, laiton, zinc et alliages d'étain. Alternativement, la couche principale peut être réalisée dans un matériau choisi dans le groupe constitué des matériaux suivants : acier inoxydable, un alliage de nickel dans lequel le nickel représente à lui seul au moins 45% de la masse de l'alliage, d'un alliage de titane dans lequel le titane représente à lui seul au moins 70% de la masse de l'alliage, nickel.

Avantageusement, le revêtement présente une résistivité électrique inférieure à celle du matériau formant la couche principale. Il peut être choisi pour ses propriétés anticorrosion, par exemple être constitué d'argent. Le revêtement peut être formé par dépôt sur la couche principale, avant ou après une étape de laminage, comme cela a été présenté dans un paragraphe précédent. Ce ruban peut être enroulé sur le fil textile pour constituer un fil d'antenne 7a, 7b, de sorte à exposer le revêtement. On profite alors de la relative faible résistivité de ce revêtement pour favoriser, par effet de peau, la conduction électrique d'un signal engendré dans le fil d'antenne par un rayonnement électromagnétique.

Quelle que soit la nature choisie du ruban, celui-ci présente une épaisseur faible, inférieure à 50 microns, et typiquement compris entre 5 microns et 20 microns, et avantageusement entre 5 microns et 10 microns, de manière à pouvoir être suffisamment flexible pour être enroulé en spires sur le fil textile. Il est apte à se déformer élastiquement ou plastiquement. Typiquement, le ruban présente une épaisseur 10 à 20 fois, voire 30 fois, inférieure au diamètre du fil textile. Le diamètre des fils d'antenne 7a, 7b est donc essentiellement déterminé par celle du fil textile. Ce diamètre est parfaitement compatible avec la hauteur et la profondeur des rainures 2a, 2b aménagées dans la puce 1 du dispositif D, dans lesquelles les fils d'antenne sont destinés à être logés.

Le ruban en matériau électriquement conducteur peut présenter une largeur comprise entre 40 microns et 200 microns, sans que toutefois cette caractéristique ne forme une limitation quelconque. Dans certains cas, cette largeur peut être choisie pour être plus étendue que la longueur de la puce, c'est-à-dire la dimension de la puce selon laquelle les rainures longitudinales 2a, 2b et/ou les fils d'antennes sont agencés (typiquement de l'ordre de 500 microns). De la sorte une spire peut entièrement occuper une rainure. On facilite alors l'assemblage des fils d'antenne 7a, 7b à la puce 1, et notamment lors de la liaison électrique des fils aux plots de connexion 4a, 4b lorsque les spires du ruban ne sont pas jointives.

L'enroulement du ruban en spires autour du film textile peut-être réalisé de multiples manières. Ainsi, et comme cela est représenté sur la figure 1a, les spires peuvent être non jointives, c'est-à-dire que deux spires successives sont espacées l'une de l'autre et ne se touchent pas. Alternativement, on peut prévoir d'enrouler le ruban en spires jointives ou en spires se recouvrant. Des spires jointives contribuent à améliorer la conductivité électrique du fil.

On peut par ailleurs prévoir une pluralité de rubans électriquement conducteurs, tous enroulés en spires sur le fil textile pour former un fil d'antenne 7a, 7b. On améliore de la sorte la robustesse mécanique et électrique du fil. On assure notamment la continuité électrique du fil d'antenne, même après la rupture de l'un des rubans. Dans un tel cas, les sens d'enroulement des rubans sur le fil textile peuvent être tous identiques ou être différents. Les rubans sont constitués de matériaux électriquement conducteurs qui peuvent être tous identiques ou différer entre eux.

Quels que soient le nombre, la nature, et le sens d'enroulement du ou des ruban (s) sur le fil textile, on dispose à la fin de cette étape préalable de préparation, d'un fil d'antenne permettant du constituer une antenne dipôle robuste, c'est à dire présentant une grande résistance mécanique, et flexible, c'est-à-dire apte à absorber des efforts de traction, de torsion et/ou de flexion sans se détériorer, même après lorsque ces efforts se répètent, en cycle, de nombreuses fois.

La relative faible épaisseur du ruban combinée à la nature textile du fil permet ainsi à l'antenne d'être souple, et donc de se déformer par pliage par exemple. Comme on l'a déjà noté, la fabrication du ruban peut le rendre particulièrement résistant à la fatigue. L'agencement en spires du ruban sur le fil textile permet notamment d'absorber des efforts de traction appliqués au fil d'antenne. La dimension (son diamètre) du fil d'antenne peut être identique celle d'un fil conducteur conventionnel.

Ces propriétés ne pourraient être obtenues identiquement par une antenne réalisée à l'aide d'un fil conducteur conventionnel, présentant une section transversale circulaire et entièrement constitué d'un conducteur électrique, même si celui-ci était disposé en spires. C'est notamment le cas pour sa déformation en traction.

On note également que la configuration des fils d'antenne qui vient d'être présentée est parfaitement compatible avec le procédé de fabrication d'un dispositif d'émission-réception radiofréquence D tel que celui-ci est notamment décrit dans le document US2019391560. L'enroulement du ruban sur le fil textile peut être réalisé avant l'étape d'assemblage de la puce 1 aux deux fils d'antenne. À nouveau, un tel fil d'antenne présente un facteur de forme, et notamment un diamètre, tout à fait similaire à celui d'un fil conventionnel, présentant une section transversale circulaire et entièrement constitué d'un conducteur.

Un fil d'antenne comprenant l'enroulement en spires du ruban conducteur présente d'autres avantages, notamment de natures électriques. Elle présente une impédance présentant une composante inductive plus importante qu'un simple fil conducteur conventionnel. En conséquence, il est possible de réduire la dimension de la boucle b d'adaptation d'impédance de l'antenne dipôle. On rend le dispositif plus robuste et on réduit la quantité de résine de protection dont on enrobe parfois cette boucle b ou les fils composant cette boucle. On forme un dispositif d'émission-réception dont une partie rigide est de plus petite dimension que dans les solutions connues. De plus, la longueur du fil conducteur 7a peut-être réduite, sans affecter la capacité de transmission réception de l'antenne dipôle, ce qui permet de rendre le dispositif D plus compact. C'est en particulier le cas lorsque le dispositif D forme une étiquette RFID et que le circuit d'émission-réception 4 est appelé à fonctionner dans une gamme de fréquences normalisée, autour de 900 mégahertz.

Il est également possible de découper le ruban sans découper le fil textile, ce qui permet de briser la continuité électrique du fil, par exemple pour raccourcir la longueur effective de l'antenne, sans briser la continuité mécanique du fil d'antenne. Cette caractéristique peut notamment être exploitée lors de la fabrication d'une pluralité de dispositifs, chaînés entre eux par l'intermédiaire de deux fils textiles de grandes longueurs, les rubans enroulés en spires sur ces deux fils textiles de grande longueur étant découpés régulièrement pour définir des antennes respectivement associées à chaque puce. Cela permet de rendre les dispositifs fonctionnels, même lorsqu'ils se présentent sous une forme chaînée.

Bien entendu l'invention n'est pas limitée au mode de mise en oeuvre décrit et on peut y apporter des variantes de réalisation sans sortir du cadre de l'invention tel que défini par les revendications.

Ainsi, le dispositif D n'est nullement limité à incorporer une puce 1 munie de rainures 2a, 2b, comme cela a été présenté à titre d'illustration en référence aux figures. Les rainures facilitent le positionnement des fils d'antenne 7a, 7b vis-à-vis de la puce 1 lors de leur assemblage. On peut prévoir que le capot 5 soit assemblé sur le substrat 3 uniquement temporairement, pour faciliter cette étape de liaison, mais qu'il soit retiré après celle-ci. Un tel procédé d'assemblage est notamment décrit dans le document US2020335475.

On peut également prévoir un seul fil d'antenne, et que celui-ci ne soit pas électriquement en contact avec la puce 1. Ainsi, et comme cela est par exemple exposé dans le document US2010321161, les plots de connexion 4a, 4b de la puce 1 peuvent être reliés à une antenne à boucle inductive. Cette antenne peut être formée par une piste conductrice disposée en boucle sur un support. La puce 1 repose sur le support pour précisément mettre en contact électrique ses plots avec cette piste, directement ou indirectement. Cet ensemble peut être encapsulé, par exemple d'une matière plastique, pour former un dispositif monolithique. Le dispositif monolithique est associé à un unique fil d'antenne conforme à la présente description, c'est-à-dire constitué d'un fil textile et d'au moins un ruban enroulé en spires autour de ce fil. L'unique fil d'antenne est disposé à proximité du dispositif monolithique de sorte que l'antenne à boucle inductive puisse s'y coupler électriquement. Le fil d'antenne peut être apposé ou intégré à un tissu sur lequel a été fixé le dispositif monolithique.

Quelle que soit la configuration choisie du dispositif d'émission-réception radiofréquence D, celui-ci est formé d'une puce 1 comprenant un circuit d'émission-réception 4 et deux plots de connexion 4a, 4b électriquement reliés au circuit d'émission-réception 4. Au moins un fil d'antenne est couplé à la puce, et ce fil d'antenne est constitué d'un fil textile et d'au moins un ruban enroulé en spires autour du fil textile.

Un dispositif selon la présente description peut avantageusement être adossé ou incorporé (par exemple brodé ou tissé) dans une pièce textile, par exemple pour former une étiquette électronique (par exemple une étiquette RFID). Une telle étiquette peut trouver son application dans le domaine de l'habillage (pour être associé à un vêtement) ou de la blanchisserie (pour être associé à un drap, par exemple). Pour faciliter sa manipulation, on peut recouvrir un dispositif confirme à l'invention d'un fil ou d'une pluralité de fils textiles de couverture. La robustesse mécanique du dispositif lui permet de subir, sans perdre ses fonctionnalités, des traitements de lavage qui le sollicitent mécaniquement et thermiquement, ce qui rend donc son usage dans le domaine de l'habillement et de la blanchisserie particulièrement bien adapté.

## Revendications

1. Dispositif d'émission-réception radiofréquence (D) comprenant :
- une puce (1) comprenant un circuit d'émission-réception (4) et au moins deux plots de connexion (4a, 4b) électriquement reliés au circuit d'émission-réception (4) ;
- une antenne dipôle (7a, 7b) couplée au circuit d'émission-réception (4) de la puce (1) ;
le dispositif d'émission-réception radiofréquence (D) étant **caractérisé en ce que** l'antenne (7a, 7b) comprend un fil textile et au moins un ruban formé d'un matériau électriquement conducteur, le ruban étant enroulé en spires autour du fil textile pour le recouvrir au moins en partie.

2. Dispositif d'émission-réception radiofréquence (D) selon la revendication précédente dans lequel l'antenne est constituée de deux fils d'antenne (7a, 7b) respectivement électriquement reliés aux deux plots de connexion (4a, 4b) de la puce (1).

3. Dispositif d'émission-réception radiofréquence (D) selon la revendication précédente dans lequel les deux fils d'antenne (7a, 7b) sont respectivement logés dans deux rainures longitudinales (2a, 2b) aménagées sur des faces opposées de la puce (1).

4. Dispositif d'émission-réception radiofréquence (D) selon l'une des deux revendications précédentes dans lequel l'antenne dipôle comprend une boucle (b) d'adaptation d'impédance.

5. Dispositif d'émission-réception radiofréquence (D) selon l'une des revendications 2 à 4 dans lequel les deux fils d'antenne (7a, 7b) sont respectivement assemblés aux deux plots de connexion (4a, 4b) de la puce (1) par l'intermédiaire d'un matériau de liaison.

6. Dispositif d'émission-réception radiofréquence (D) selon l'une des revendications précédentes dans lequel le ou les matériau(x) constituant le fil textile est (sont) choisi(s) de sorte que, lorsque le fil est placé en tension sous une charge de 2N, un échauffement local du fil à une température déterminée choisie entre 80° et 300°C ne provoque pas sa rupture.

7. Dispositif d'émission-réception radiofréquence (D) selon la revendication précédente dans lequel le (ou les) matériau(x) constituant le fil textile présente(nt) une température de transition vitreuse supérieure à 150°C.

8. Dispositif d'émission-réception radiofréquence (D) selon l'une des revendications précédentes dans lequel le fil textile présente un pouvoir d'élongation élastique supérieur ou égale à 5%, 20%, 50%, voire même à 100% de sa longueur au repos.

9. Dispositif d'émission-réception radiofréquence (D) selon la revendication précédente dans lequel le fil textile est composé à partir de fibres aramides ou d'un polyester aromatique.

10. Dispositif d'émission-réception radiofréquence (D) selon l'une des revendications 1 à 7 dans lequel le fil textile présente un pouvoir d'élongation élastique inférieur à 5%.

11. Dispositif d'émission-réception radiofréquence (D) selon l'une des revendications précédentes dans lequel le ruban est constitué d'un fil métallique laminé.

12. Dispositif d'émission-réception radiofréquence (D) selon l'une des revendications précédentes dans lequel le ruban présente une épaisseur inférieure ou égale à 30 fois un diamètre du fil textile, avantageusement inférieure ou égale à 10 fois ce diamètre.

13. Dispositif d'émission-réception radiofréquence (D) selon l'une des revendications précédentes dans lequel les spires sont non-jointives, espacées entre elles.

14. Dispositif d'émission-réception radiofréquence (D) selon l'une des revendications 1 à 12 dans lequel les spires sont jointives ou se recouvrent.

15. Dispositif d'émission-réception radiofréquence (D) selon l'une des revendications précédentes comprenant une pluralité de rubans formés de matériaux électriquement conducteurs enroulés en spires autour du fil textile.

16. Étiquette électronique comprenant une pièce textile et, adossé et/ou incorporé à la pièce textile, un dispositif d'émission-réception radiofréquence (D) selon l'une des revendications précédentes.

## Patentansprüche

1. Hochfrequenz-Sende-Empfangsvorrichtung (D), umfassend:
- einen Chip (1), der eine Sende-Empfangsschaltung (4) und mindestens zwei Anschluss-Pads (4a, 4b) umfasst, die elektrisch mit der Sende-Empfangsschaltung (4) verbunden sind;
- eine Dipolantenne (7a, 7b), die mit der Sende-Empfangsschaltung (4) des Chips (1) gekoppelt ist;
wobei die Hochfrequenz-Sende-Empfangsvorrichtung (D)
**dadurch gekennzeichnet ist, dass** die Antenne (7a, 7b) ein Textilgarn und mindestens ein Band aus einem elektrisch leitenden Material umfasst, wobei das Band in Windungen um das Textilgarn gewickelt ist, sodass es zumindest teilweise abgedeckt ist.

2. Hochfrequenz-Sende-Empfangsvorrichtung (D) nach dem vorstehenden Anspruch, wobei die Antenne aus zwei Antennendrähten (7a, 7b) besteht, die jeweils elektrisch mit den beiden Anschluss-Pads (4a, 4b) des Chips (1) verbunden sind.

3. Hochfrequenz-Sende-Empfangsvorrichtung (D) nach dem vorstehenden Anspruch, wobei die beiden Antennendrähte (7a, 7b) jeweils in zwei Längsnuten (2a, 2b) aufgenommen sind, die auf gegenüberliegenden Seiten des Chips (1) angeordnet sind.

4. Hochfrequenz-Sende-Empfangsvorrichtung (D) nach einem der beiden vorstehenden Ansprüche, wobei die Dipolantenne eine Impedanzanpassungsschleife (b) umfasst.

5. Hochfrequenz-Sende-Empfangsvorrichtung (D) nach einem der Ansprüche 2 bis 4, wobei die zwei Antennendrähte (7a, 7b) jeweils über ein Verbindungsmaterial mit den beiden Anschluss-Pads (4a, 4b) des Chips (1) verbunden sind.

6. Hochfrequenz-Sende-Empfangsvorrichtung (D) nach einem der vorstehenden Ansprüche, wobei das Material bzw. die Materialien, aus denen das Textilgarn besteht, so gewählt ist/sind, dass bei einer Belastung des Garns mit einer Spannung von 2 N eine lokale Erwärmung des Garns bei einer bestimmten Temperatur zwischen 80° und 300 °C keinen Riss verursacht.

7. Hochfrequenz-Sende-Empfangsvorrichtung (D) nach dem vorstehenden Anspruch, wobei das Material bzw. die Materialien, aus denen das Textilgarn besteht, eine Glasübergangstemperatur von mehr als 150 °C aufweist/aufweisen.

8. Hochfrequenz-Sende-Empfangsvorrichtung (D) nach einem der vorstehenden Ansprüche, wobei das Textilgarn eine elastische Dehnfähigkeit aufweist, die größer oder gleich 5 %, 20 %, 50 % oder sogar 100 % ist.

9. Hochfrequenz-Sende-Empfangsvorrichtung (D) nach dem vorstehenden Anspruch, bei der das Textilgarn aus Aramidfasern oder einem aromatischen Polyester besteht.

10. Hochfrequenz-Sende-Empfangsvorrichtung (D) nach einem der Ansprüche 1 bis 7, wobei das Textilgarn eine elastische Dehnfähigkeit aufweist, die kleiner als 5 % ist.

11. Hochfrequenz-Sende-Empfangsvorrichtung (D) nach einem der vorstehenden Ansprüche, wobei das Band aus einem gewalzten Metalldraht besteht.

12. Hochfrequenz-Sende-Empfangsvorrichtung (D) nach einem der vorstehenden Ansprüche, wobei das Band eine Dicke aufweist, die kleiner oder gleich dem 30-fachen Durchmesser des Textilgarns ist, vorteilhafterweise kleiner oder gleich dem 10-fachen dieses Durchmessers.

13. Hochfrequenz-Sende-Empfangsvorrichtung (D) nach einem der vorstehenden Ansprüche, wobei die Windungen nicht aneinander stoßend und voneinander beabstandet sind.

14. Hochfrequenz-Sende-Empfangsvorrichtung (D) nach einem der Ansprüche 1 bis 12, wobei die Windungen aneinander stoßend sind und sich überlappen.

15. Hochfrequenz-Sende-/Empfangsvorrichtung (D) nach einem der vorstehenden Ansprüche, umfassend eine Vielzahl von Bändern aus elektrisch leitenden Materialien, die in Windungen um das Textilgarn gewickelt sind.

16. Elektronisches Etikett, bestehend aus einem Textilstück und einer am Textilstück befestigten und/oder in das Textilstück integrierten Hochfrequenz-Sende-Empfangsvorrichtung (D) nach einem der vorstehenden Ansprüche.

## Claims

1. A radiofrequency transceiver device (D) comprising:
- a chip (1) comprising a transceiver circuit (4) and at least two connection pads (4a, 4b) electrically connected to the transceiver circuit (4);
- a dipole antenna (7a, 7b) coupled to the transceiver circuit (4) of the chip (1);
the radiofrequency transceiver device (D) being **characterized in that** the antenna (7a, 7b) comprises a textile thread and at least one ribbon formed of an electrically conductive material, the ribbon being wound in turns around the textile thread in order to at least partly cover it.

2. The radiofrequency transceiver device (D) according to the preceding claim, wherein the antenna consists of two antenna wires (7a, 7b) respectively electrically connected to the two connection pads (4a, 4b) of the chip (1).

3. The radiofrequency transceiver device (D) according to the preceding claim, wherein the two antenna wires (7a, 7b) are respectively housed in two longitudinal grooves (2a, 2b) arranged on opposite faces of the chip (1).

4. The radiofrequency transceiver device (D) according to one of the two preceding claims, wherein the dipole antenna comprises an impedance matching loop (b).

5. The radiofrequency transceiver device (D) according to one of the claims 2 to 4, wherein the two antenna wires (7a, 7b) are respectively assembled to the two connection pads (4a, 4b) of the chip (1) via a bonding material.

6. The radiofrequency transceiver device (D) according to one of preceding claim, wherein the material(s) constituting the textile thread is/are chosen so that, when the wire is placed in tension under a load of 2N, local heating of the wire at a determined temperature chosen between 80° and 300°C does not cause it to break.

7. The radiofrequency transceiver device (D) according to the preceding claim, wherein the material (s) constituting the textile yarn has (s) a glass transition temperature of greater than 150°C.

8. The radiofrequency transceiver device (D) according to one of the preceding claims, wherein the textile yarn has an elastic elongation power greater than or equal to 5%, 20%, 50%, or even 100% of its length at rest.

9. The radiofrequency transceiver device (D) according to the preceding claim, wherein the textile yarn is composed of aramid fibers or an aromatic polyester.

10. The radiofrequency transceiver device (D) according to one of the claims 1 to 7, wherein the textile yarn has an elastic elongation power of less than 5%.

11. The radiofrequency transceiver device (D) according to one of the preceding claims, wherein the ribbon is made of a laminated metal wire.

12. The radiofrequency transceiver device (D) according to one of the preceding claims, wherein the ribbon has a thickness less than or equal to 30 times a diameter of the textile thread, advantageously less than or equal to 10 times that diameter.

13. The radiofrequency transceiver device (D) according to one of the preceding claims, wherein the turns are non-contiguous, spaced apart.

14. The radiofrequency transceiver device (D) according to one of the claims 1 to 12, wherein the turns are contiguous or overlapping.

15. The radiofrequency transceiver device (D) according to one of the preceding claims, comprising a plurality of ribbons formed of electrically conductive materials wound in turns around the textile thread.

16. An electronic label comprising a textile part and, backing and/or incorporated into the textile part, a radiofrequency transceiver device (D) according to one of the preceding claims.
